# EUROPEAN PATENT APPLICATION

(11) **EP 4 708 263 A1**
(43) Date of publication of application: **11.03.2026**
(21) Application number: 24800030.9
(22) Date of filing: 04.03.2024
(51) Int. Cl.: G09C 1/00, G06F 16/28, G06F 16/2455

(54) **ANALYSIS DEVICE, ANALYSIS METHOD, AND ANALYSIS PROGRAM**

(30) Priority: 01.05.2023 JP 2023075878
(71) Applicant: NTT DOCOMO BUSINESS, Inc., Tokyo 100-8019 (JP)
(72) Inventor: TANAKA, Satoshi, Tokyo 100-8019 (JP); SAKURAI, Yoichi, Tokyo 100-8019 (JP); SAWADA, Masashi, Tokyo 100-8019 (JP); YAMAGIWA, Ryuta, Tokyo 105-6309 (JP)
(74) Representative: Hoffmann Eitle
(86) International application number: PCT/JP2024/008158
(87) International publication number: WO 2024/228299

(57) **Abstract**

An analysis device according to an embodiment includes a division unit, an inner combination unit, and a row combination unit. The division unit divides a first table including records in which values of join keys are overlapped into a plurality of record groups in which the values of the join keys are not overlapped. The inner combination unit performs inner combination between each of the plurality of record groups and a second table having a join key by secure computation. The row combination unit performs row combination on the plurality of tables obtained by the inner combination.

## Description

### [Technical Field]

The present invention relates to an analysis device, an analysis method, and an analysis program.

### [Background Art]

In the related art, a secure computation system that performs statistical calculation while keeping data secret and provides a user with a statistic obtained as a result of the calculation is known. For example, the secure computation system may be used for analysis of data in a medical field or the like that handles important personal information.

In addition, a method of combining tables using secure computation is known (See, for example, Patent Literature 3).

### [Citation List]

### [Patent Citation]

Patent Literature 1: International Publication Pamphlet No. WO 2019/124260 A
Patent Literature 2: Japanese Laid-open Patent Publication No. 2020-042128 A
Patent Literature 3: Japanese Laid-open Patent Publication No. 2014-139640 A

### [Non Patent Citation]

Non Patent Literature 1: NTT Corp., System of Secure Computation and Principles thereof, (online), (searched on November 24, 2022), Internet <URL:https://www.rd.ntt/sil/project/sc/secure_computation.h tml>

### [Summary of Invention]

### [Technical Problem]

However, the combination of tables by secure computation in the related art has a problem that the usage amount of a memory is large.

For example, in the inner combination of tables using the secure computation in the related art, a procedure of extending a right table may be performed by duplicating a record of the right table according to the number of specific records included in a left table. At that time, the usage amount of the memory increases in order to store the extended right table.

### [Solution to Problem]

In order to solve the above-described problems and achieve the object, an analysis device according to the present invention includes: a division unit that divides a first table including records in which values of keys are overlapped into a plurality of record groups in which the values of the keys are not overlapped; an inner combination unit that performs inner combination between each of the plurality of record groups and a second table having a key by secure computation; and a row combination unit that performs row combination on a plurality of tables obtained by the inner combination.

### [Advantageous Effects of Invention]

According to the present invention, it is possible to reduce a usage amount of a memory in combining tables by secure computation.

### [Brief Description of Drawings]

FIG. 1 is a diagram illustrating a configuration example of an analysis system according to an embodiment.
FIG. 2 is a diagram illustrating a configuration example of an analysis device according to the embodiment.
FIG. 3 is a diagram illustrating a procedure of table combination according to the embodiment.
FIG. 4 is a flowchart illustrating a flow of processing of the analysis device according to the embodiment.
FIG. 5 is a diagram illustrating an example of a computer that executes an analysis program.
FIG. 6 is a diagram illustrating a procedure of table combination in the related art.

### [Embodiments for Carrying Out the Invention]

Hereinafter, embodiments of an analysis device, an analysis method, and an analysis program according to the present application are described in detail with reference to the drawings. Note that the present invention is not limited to the embodiments described below.

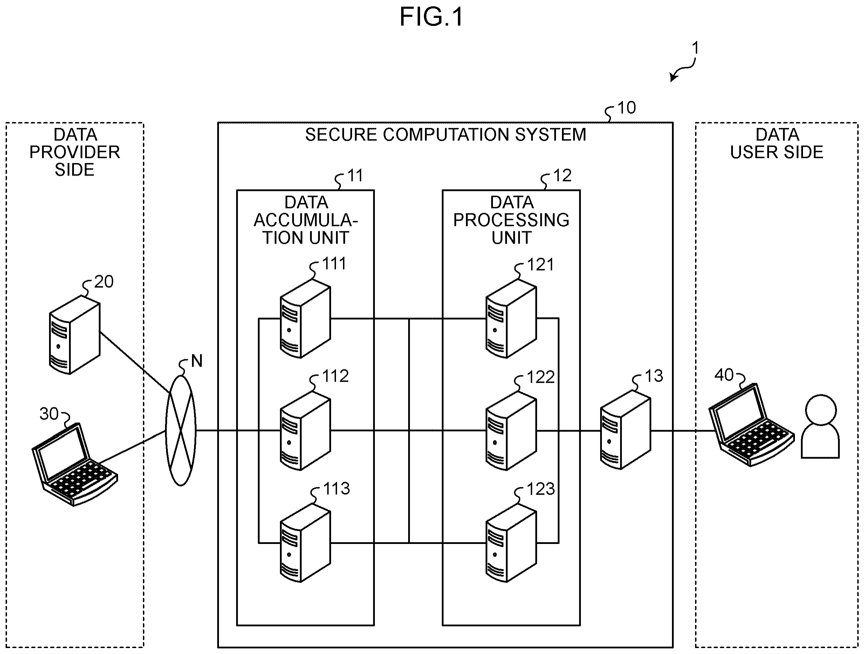

First, a configuration of an analysis system is described with reference to FIG. 1. The analysis system is a system for analyzing data using secure computation.

As illustrated in FIG. 1, an analysis system 1 includes a secure computation system 10. Furthermore, the secure computation system 10 is connected to a providing device 20 and a providing device 30 via a network N. For example, the network N is the Internet. In addition, the secure computation system 10 is connected to a terminal device 40.

The providing device 20 and the providing device 30 are devices on the data provider side. The providing device 20 and the providing device 30 provide (register) data to the secure computation system 10.

The data provided by the providing device 20 and the providing device 30 includes information (for example, personal information such as a name and an address of an individual) which is desirably concealed. For example, the providing device 20 and the providing device 30 provide data related to a receipt and a diagnosis procedure combination (DPC) used in a medical institution.

The secure computation system 10 includes a data accumulation unit 11 and a data processing unit 12. The data accumulation unit 11 includes a plurality of accumulation devices (an accumulation device 111, an accumulation device 112, and an accumulation device 113) that accumulate data by secret sharing. In addition, the data processing unit 12 includes a plurality of calculation devices (a calculation device 121, a calculation device 122, and a calculation device 123) that process data by secure computation. Note that the number of accumulation devices and the number of calculation devices are not limited to the example illustrated in FIG. 1.

The secure computation system 10 can perform secret sharing and secure computation according to the method described in Non-Patent Literature 1 (posted URL: https://www.rd.ntt/sil/project/sc/secure_computation.html).

First, the data provided to the secure computation system 10 is divided (fragmented) into a plurality of shares. Then, the plurality of shares are distributed into and accumulated in a plurality of accumulation devices included in the data accumulation unit 11. In the example of FIG. 1, the provided data is divided into three shares. Then, the accumulation device 111, the accumulation device 112, and the accumulation device 113 accumulate shares one by one.

The data processing unit 12 performs secure computation on the share accumulated in the data accumulation unit 11. The data processing unit 12 executes secure computation by multi-party computation using a plurality of calculation devices. In the example of FIG. 1, the data processing unit 12 executes secure computation by the calculation device 121, the calculation device 122, and the calculation device 123.

The data processing unit 12 can perform various statistical operations without restoring the share. For example, the data processing unit 12 can perform an operation of a table such as sorting and combining, aggregation of the number of records, calculation of statistics such as a total sum, an average, a maximum value, a minimum value, and a sample variance, and a statistical test such as t-test. Furthermore, the data processing unit 12 can perform statistical analysis such as regression analysis and principal component analysis.

An analysis device 13 analyzes data using the data processing unit 12. The analysis device 13 provides an analysis result to the terminal device 40 on the data user side based on the result of the secure computation executed by the data processing unit 12. The user can obtain an analysis result of data via the terminal device 40.

For example, the secure computation system 10 may be provided with data related to attributes and bodies for each individual. The data related to the attribute and the body is personal information that is desirably concealed. The data related to the attributes and the bodies includes, for example, ages, genders, heights, weights, and the like. The data accumulation unit 11 stores a share obtained by fragmenting the provided data in each accumulation device.

Note that each divided share is data that is singly meaningless. Therefore, the original data cannot be restored from one share. Meanwhile, it is possible to restore the original data by gathering a plurality of shares.

The user of the data cannot view the registered data itself but can view the analysis result of the data via the analysis device 13 and the terminal device 40. For example, when the data includes the gender and the weight of an individual, the user cannot view the gender and the weight of each individual but can view the "average weight of men" that is an analysis result of the data.

As an example, the data accumulation unit 11 can perform secret sharing by using a technique referred to as Shamir's threshold secret sharing method. At this time, the data accumulation unit 11 stores, as shares, three coordinates passing through a polynomial having the original data as an intercept in each server. In addition, since the inclination of the polynomial is randomly determined, even if the original data is the same, the share is not necessarily the same every time. The original data may be a numerical value or data converted into a numerical value.

The secure computation system 10 can restore the original data from a plurality of shares. If the polynomial is a linear expression, the secure computation system 10 can obtain the intercept (corresponding to the original data) from the intersection of a straight line connecting the two coordinates (corresponding to the share) and an axis. Meanwhile, since a straight line is not determined from one coordinate, the original data cannot be restored.

In addition, as described above, the data processing unit 12 can perform secure computation on the original data without restoring the share. For example, the result of adding the shares represented by the coordinates corresponds to the share of the result of adding the original data of each share.

The analysis device 13 causes the data processing unit 12 to execute processing by secure computation in response to a request from the terminal device 40. Note that the data processing unit 12 or the terminal device 40 may embody a function equivalent to that of the analysis device 13. For example, the analysis system 1 may be a configuration not including the analysis device 13. In that case, the terminal device 40 is connected to the data processing unit 12 and executes processing equivalent to that of the analysis device 13. Furthermore, the statistical operation based on the share may be executed by the terminal device 40 instead of the data processing unit 12.

In the first embodiment, an example in which the analysis device 13 combines tables by secure computation is described. Note that the table to be combined by the analysis device 13 is, for example, a table included in a relational database (RDB) in which a plurality of tables are associated.

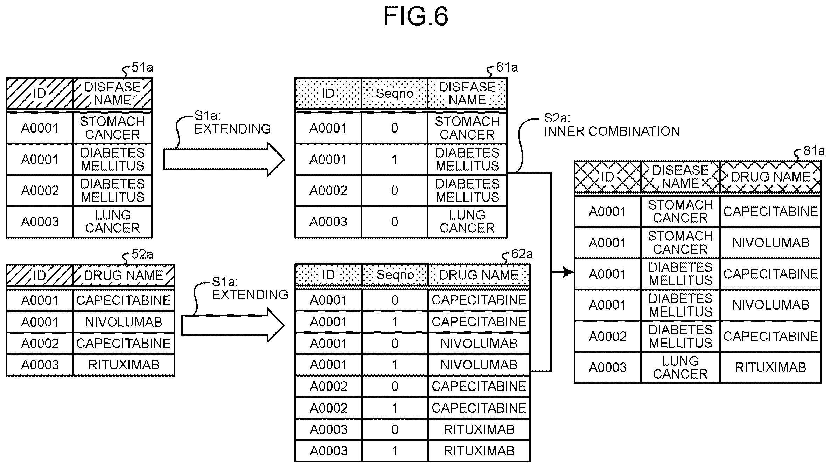

Here, table combination in secure computation in the related art is described with reference to FIG. 6. FIG. 6 is a diagram illustrating a procedure of the table combination in the related art. Note that the inner combination is an operation of extracting a record in which values of one or more specific columns (hereinafter, referred to as a join key) match from two tables and combining the extracted records. For example, the inner combination corresponds to INNER JOIN in SQL.

In the example of FIG. 6, an analysis device in the related art (hereinafter, an analysis device 13a) combines a table 51a and a table 52a. In the example of FIG. 6, the "ID" column is a join key.

First, the analysis device 13a extends the table 51a and the table 52a as follows (Step S1a).

The analysis device 13a generates a table 61a in which a "Seqno" column is added to the table 51a that is the left table. The analysis device 13a assigns a different number to the "Seqno" column to the record in which the values of the "ID" column overlap.

For example, since there are two records in which the value of the "ID" column in the table 51a is "A0001", the analysis device 13a assigns "0" to the "Seqno" column of the first record and "1" to the "Seqno" column of the second record, among the two records in the table 61a.

In addition, for example, since there is only one record in which the value of the "ID" column of the table 51a is "A0002", the analysis device 13a assigns "0" to the "Seqno" column of the one record in the table 61a. In addition, for example, since there is only one record in which the value of the "ID" column of the table 51a is "A0003", the analysis device 13a assigns "0" to the "Seqno" column of the one record in the table 61a.

The analysis device 13a generates a table 62a in which a "Seqno" column is added to the table 52a that is the right table. Then, the analysis device 13a duplicates each record of the table 62a according to the maximum number of duplicates of records of the table 51a. The analysis device 13a performs duplication so that the number after duplication in the table 62a of each record of the duplication source is equal to the maximum number of duplicates of the table 51a.

Since the maximum number of duplicates of the table 51a that is the left table is two, the analysis device 13a duplicates each record of the table 52a into two. This is the same meaning as the analysis device 13a adds only one record (the maximum number of duplicates - 1) that is the same as each record to the table 62a in a state in which the "Seqno" column is merely added to the table 52a.

Similarly to the case of the table 61a, the analysis device 13a assigns a different number to the "Seqno" column to the record in which the values of the "ID" column of the duplicated table 62a overlap. For example, the analysis device 13a assigns "0" to the "Seqno" column of the first record and "1" to the "Seqno" column of the second record among the two records of the table 62a where the "ID" column is "A0001" and the "Drug Name" column is "Capecitabine".

The analysis device 13a performs inner combination of the table 61a and the table 62a using the "ID" column and the "Seqno" column as join keys (Step S2a). Note that the join keys in the inner combination of the table 61a and the table 62a are the "ID" column and the "Seqno" column, but the join key in the entire procedure of the inner combination of the table 51a and the table 52a is the "ID" column.

As described above, in the technique in the related art, a large-sized table such as the table 62a is generated, and the memory usage amount increases. Meanwhile, the analysis device 13 of the first embodiment can reduce the use amount of the memory in the combination of the tables by the secure computation as compared with the related art.

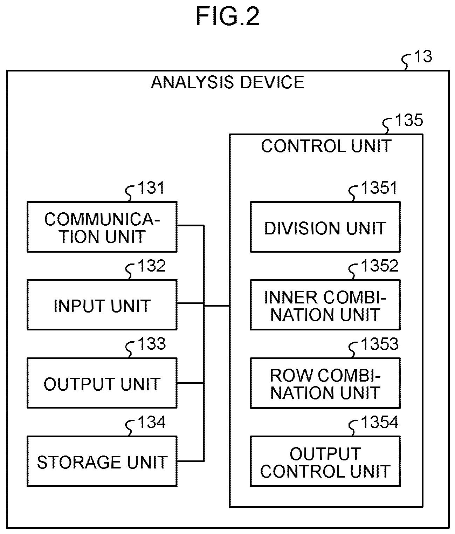

A configuration of the analysis device 13 is described with reference to FIG. 2. FIG. 2 is a diagram illustrating a configuration example of the analysis device according to the embodiment.

Each unit of the analysis device 13 is described. As illustrated in FIG. 2, the analysis device 13 includes a communication unit 131, an input unit 132, an output unit 133, a storage unit 134, and a control unit 135.

The communication unit 131 performs data communication between other devices. For example, the communication unit 131 is a network interface card (NIC). The communication unit 131 can transmit and receive data to and from other devices.

The input unit 132 is an interface for receiving input of data. The input unit 132 is connected, for example, to an input device such as a mouse and a keyboard.

The output unit 133 is an interface for outputting data. The output unit 133 is connected, for example, to an input device such as a display and a speaker.

The storage unit 134 is a storage device such as a hard disk drive (HDD), a solid state drive (SSD), or an optical disk. Note that the storage unit 134 may be a semiconductor memory capable of rewriting data, such as a random access memory (RAM), a flash memory, or a non volatile static random access memory (NVSRAM). The storage unit 134 stores an operating system (OS) and various programs executed by the analysis device 13.

The control unit 135 controls the entire analysis device 13. The control unit 135 is, for example, an electronic circuit such as a central processing unit (CPU), a micro processing unit (MPU), or a graphics processing unit (GPU), or an integrated circuit such as an application specific integrated circuit (ASIC) or a field programmable gate array (FPGA). In addition, the control unit 135 includes an internal memory for storing programs and control data defining various processing procedures and executes each process using the internal memory.

The control unit 135 functions as various processing units by various programs operating. For example, the control unit 135 includes a division unit 1351, an inner combination unit 1352, a row combination unit 1353, and an output control unit 1354.

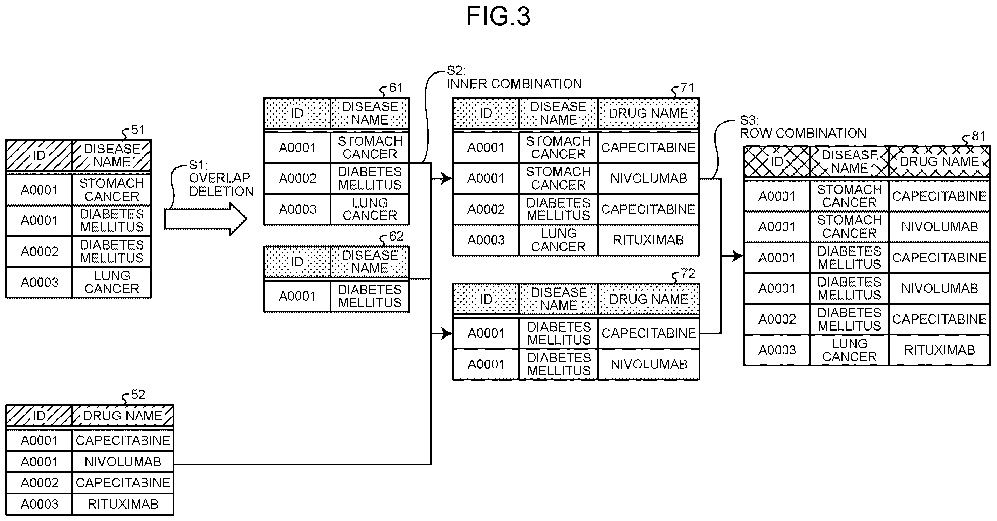

A procedure of table combination is described together with the function of each processing unit of the control unit 135 with reference to FIG. 3. FIG. 3 is a diagram illustrating a procedure of the table combination according to the embodiment. Note that, for the sake of explanation, contents of each table are shown in a state of being readable as a natural language in FIG. 3, but actually, processes illustrated in FIG. 3 are performed by secure computation on the table accumulated in an unreadable share state (for example, a sequence of seemingly meaningless numbers).

In the example of FIG. 3, a table 51 and a table 52 are combined. In the example of FIG. 3, the "ID" column is a join key. The table 51 and the table 52 are examples of a first table and a second table, respectively. In the table 51 and the table 52, records in which a value of the "ID" column that is the join key is "A0001" overlap.

First, for the record groups that are included in the table 51 and have the overlapped join key, the division unit 1351 leaves one record and deletes the other records (Step S1). For example, the division unit 1351 deletes, from the table 51, the record in which the value of the "ID" column is "A0001" and a value of the "disease name" column is "diabetes" to generate a record group 61.

Further, the division unit 1351 generates a record group 62 having the deleted record, that is, the record in which the value of the "ID" column is "A0001" and the value of the "disease name" column is "diabetes". If the record group 62 includes a record of which the join key overlaps, the division unit 1351 recursively performs the processing performed on the table 51 to further generate a record group.

In other words, in Step S1, the division unit 1351 divides the table 51 including records in which a value of a key is overlapped into a plurality of record groups in which the values of the keys are not overlapped.

Next, the inner combination unit 1352 performs inner combination between each of the plurality of tables and the table 52 having a key by secure computation (Step S2). At this time, the inner combination unit 1352 can execute a plurality of pieces of inner combination processing in parallel. For example, the inner combination between the record group 61 and the table 52 and the inner combination between the record group 61 and the table 52 may be executed in parallel.

The processor of each calculation device of the data processing unit 12 has a plurality of cores. At this time, the inner combination unit 1352 can allocate the plurality of pieces of inner combination processing to each of the plurality of cores and execute the processing in parallel.

The row combination unit 1353 performs row combination on a plurality of tables (a table 71 and a table 72 in FIG. 3) obtained by the inner combination (Step S3). As a result, a table 81 is obtained as a result of inner combination between the table 51 and the table 52. The row combination is an operation of integrating the other table in the row direction of one table. The row combination corresponds to, for example, UNION in SQL.

The output control unit 1354 outputs the table 81 to the terminal device 40. In addition, the output control unit 1354 may output a result obtained by further performing statistical analysis using the table 81.

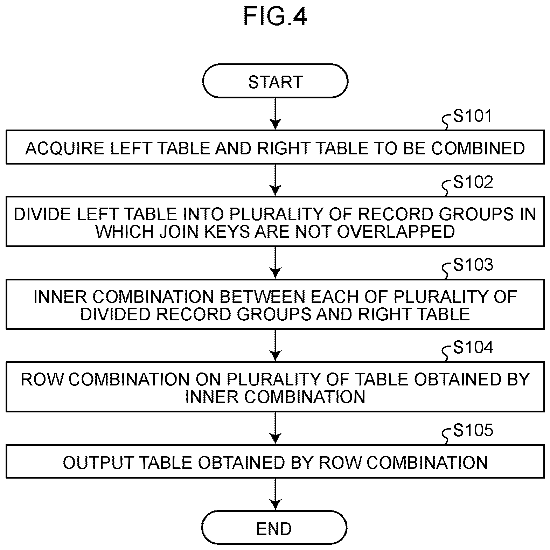

FIG. 4 is a flowchart illustrating a flow of processing of the analysis device according to the embodiment. As illustrated in FIG. 4, the analysis device 13 acquires a left table and a right table to be combined (Step S101). The processing in Step S101 may be causing the data processing unit 12 to acquire the table accumulated in the data accumulation unit 11 as a share.

Here, the left table includes a record in which the values of the join key overlap. The join key may be one or more columns set as a primary key or may be one or more columns designated by a user or the like.

Next, the analysis device 13 divides the left table into a plurality of record groups in which join keys do not overlap (Step S102).

Subsequently, the analysis device 13 performs inner combination between each of the plurality of divided record groups and the right table (Step S103). The analysis device 13 may execute the plurality of pieces of inner combination processing included in Step S103 in parallel.

Here, the analysis device 13 performs row combination on the plurality of tables obtained by the inner combination (Step S104). The analysis device 13 may execute the row combination processing in parallel.

Then, the analysis device 13 outputs the table obtained by the row combination (Step S105). In addition, the analysis device 13 may further perform statistic calculation or the like using the table obtained by the row combination and output the result as an analysis result.

### (Effects of Embodiment)

As described above, the analysis device 13 includes the division unit 1351, the inner combination unit 1352, and the row combination unit 1353. The division unit 1351 divides a first table including records in which a value of a join key is overlapped into a plurality of record groups in which the values of the join keys are not overlapped. The inner combination unit 1352 performs inner combination between each of the plurality of tables and a second table having a join key by secure computation. The row combination unit 1353 performs row combination on the plurality of tables obtained by the inner combination.

As described with reference to FIG. 6, in the combination of tables by the secure computation in the related art, the table to be combined is extended, and thus the use amount of the memory increases. Meanwhile, in the first embodiment, since the combination by secure computation is performed without extending the table to be combined, the usage amount of the memory is reduced.

The inner combination unit 1352 performs the inner combination of each of the plurality of tables and the second table having the join key in parallel. As described above, by performing the plurality of pieces of inner combination in parallel, the time requested for the processing is shortened.

### (System Configuration and the Like)

In addition, each component of each illustrated device is functionally conceptual and does not necessarily need to be physically configured as illustrated. That is, a specific form of distribution and integration of each device is not limited to the illustrated form and can be configured by functionally or physically distributing or integrating all or a part thereof in any unit according to various loads, usage conditions, and the like. Furthermore, all or any part of each processing function performed in each device can be embodied by a central processing unit (CPU) and a program analyzed and executed by the CPU or can be embodied as hardware by wired logic. Note that the program may be executed not only by the CPU but also by another processor such as a GPU.

In addition, among the processes described in the present embodiment, all or some of the processes described as being automatically performed can be manually performed, or all or some of the processes described as being manually performed can be automatically performed by a known method. In addition, the processing procedure, the control procedure, the specific name, and the information including various pieces of data and various parameters illustrated in the document and the drawings can be arbitrarily changed unless otherwise specified.

### (Program)

As an embodiment, the analysis device 13 can be implemented by installing an analysis program for executing the above analysis processing as package software or online software in a desired computer. For example, by causing the information processing apparatus to execute the above analysis program, the information processing apparatus can be caused to function as the analysis device 13. The information processing apparatus described here includes a desktop or notebook personal computer. In addition, the information processing apparatus includes mobile communication terminals such as a smartphone, a mobile phone, and a personal handyphone system (PHS), and a slate terminal such as a personal digital assistant (PDA) and the like are included in the category thereof.

Furthermore, the analysis device 13 can also be implemented as an analysis server device that uses, as a client, a terminal device used by the user and provides the client with a service related to the analysis processing. For example, the analysis server device is implemented as a server device that provides an analysis service in which two tables to be combined are input, and the combined table is output.

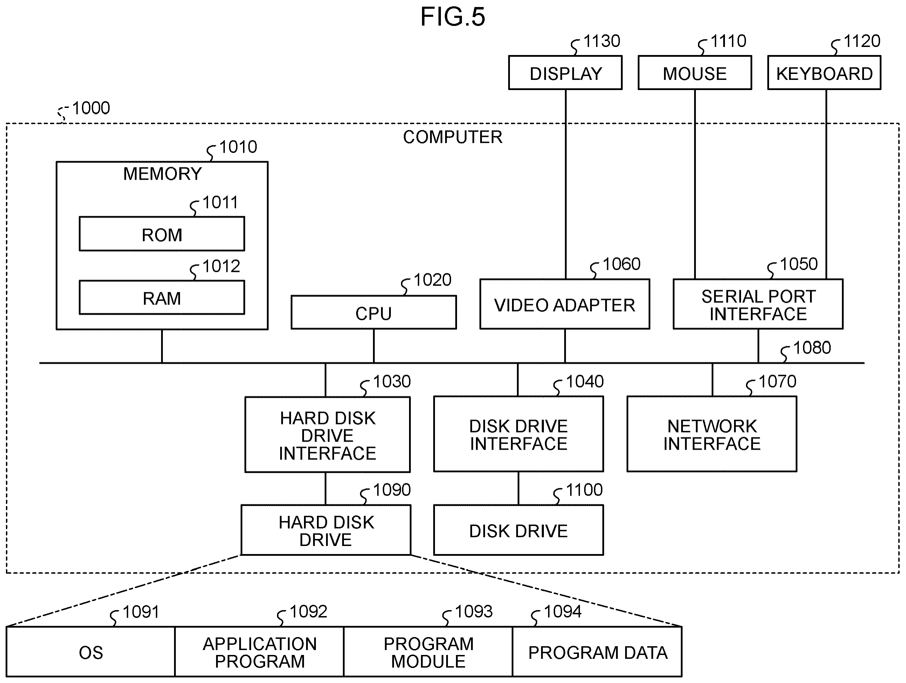

FIG. 5 is a diagram illustrating an example of a computer that executes the analysis program. A computer 1000 includes, for example, a memory 1010 and a CPU 1020. Also, the computer 1000 also includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, the program that defines each processing of the analysis device 13 is implemented as the program module 1093 in which a code executable by a computer is described. The program module 1093 is stored in, for example, the hard disk drive 1090. For example, the program module 1093 for executing processing similar to the functional configuration in the analysis device 13 is stored in the hard disk drive 1090. Note that the hard disk drive 1090 may be replaced with a solid state drive (SSD).

In addition, the setting data used in the processing of the embodiment described above is stored, for example, in the memory 1010 or the hard disk drive 1090 as the program data 1094. Then, the CPU 1020 reads the program module 1093 and the program data 1094 stored in the memory 1010 and the hard disk drive 1090 to the RAM 1012 as necessary and executes the processing of the embodiment described above.

Note that the program module 1093 and the program data 1094 are not limited to a case of being stored in the hard disk drive 1090 and may be stored in, for example, a detachable storage medium and read by the CPU 1020 via the disk drive 1100 or the like. Alternatively, the program module 1093 and the program data 1094 may be stored in another computer connected via a network (local area network (LAN), wide area network (WAN), and the like). Then, the program module 1093 and the program data 1094 may be read by the CPU 1020 from another computer via the network interface 1070.

### [Explanation of Reference]

- 1: ANALYSIS SYSTEM
- 10: SECURE COMPUTATION SYSTEM
- 11: DATA ACCUMULATION UNIT
- 12: DATA PROCESSING UNIT
- 13: ANALYSIS DEVICE
- 131: COMMUNICATION UNIT
- 132: INPUT UNIT
- 133: OUTPUT UNIT
- 134: STORAGE UNIT
- 135: CONTROL UNIT
- 1351: DIVISION UNIT
- 1352: INNER COMBINATION UNIT
- 1353: ROW COMBINATION UNIT
- 1354: OUTPUT CONTROL UNIT

## Claims

1. An analysis device comprising:
a division unit that divides a first table including records in which values of keys are overlapped into a plurality of record groups in which the values of the keys are not overlapped;
an inner combination unit that performs inner combination between each of the plurality of record groups and a second table having a key by secure computation; and
a row combination unit that performs row combination on a plurality of tables obtained by the inner combination.

2. The analysis device according to claim 1, wherein the inner combination unit performs inner combination between each of the plurality of record groups and the second table having the key in parallel.

3. An analysis method executed by an analysis device, the analysis method comprising:
a division step of dividing a first table including records in which values of keys are overlapped into a plurality of record groups in which the values of the keys are not overlapped;
an inner combination step of performing inner combination between each of the plurality of record groups and a second table having a key by secure computation; and
a row combination step of performing row combination on a plurality of tables obtained by the inner combination.

4. An analysis program that causes a computer to execute a process comprising:
a division step of dividing a first table including records in which values of keys are overlapped into a plurality of record groups in which the values of the keys are not overlapped;
an inner combination step of performing inner combination between each of the plurality of record groups and a second table having a key by secure computation; and
a row combination step of performing row combination on a plurality of tables obtained by the inner combination.
